# EUROPEAN PATENT SPECIFICATION

(11) **EP 3 468 250 B1**
(45) Date of publication and mention of the grant of the patent: **16.09.2020**
(21) Application number: 16908512.3
(22) Date of filing: 15.07.2016
(51) Int. Cl.: H04W 36/00, H04W 88/06

(54) **SWITCHING METHOD AND APPARATUS**
SCHALTVERFAHREN UND VORRICHTUNG
PROCÉDÉ ET APPAREIL DE COMMUTATION

(43) Date of publication of application: 10.04.2019
(73) Proprietor: Huawei Technologies Co., Ltd., Longgang District Shenzhen, Guangdong 518129 (CN)
(72) Inventor: LI, He, Shenzhen Guangdong 518129 (CN); CHEN, Jing, Shenzhen Guangdong 518129 (CN)
(74) Representative: Gill Jennings & Every LLP
(86) International application number: PCT/CN2016/090233
(87) International publication number: WO 2018/010187

(56) References cited:
- WO-A1-2010/142253
- CN-A- 101 048 001
- CN-A- 103 582 044
- QUALCOMM INCORPORATED: "LTE mobility without WT change", 3GPP DRAFT; R3-161362_LWA_MOBILITY_ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160523 - 20160527 22 May 2016 (2016-05-22), XP051106160, Retrieved from the Internet: URL:http://www.3gpp.org/ftp/Meetings_3GPP_ SYNC/RAN3/Docs/ [retrieved on 2016-05-22]
- SAMSUNG: "Anaysis for handover without WT change", 3GPP DRAFT; R3-161085, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, P.R. China; 20160523 - 20160527 14 May 2016 (2016-05-14), XP051094680, Retrieved from the Internet: URL:http://www.3gpp.org/ftp/tsg_ran/WG3_Iu /TSGR3_92/Docs/ [retrieved on 2016-05-14]
- SAMSUNG: "WT addition during HO Preparation or after HO", 3GPP DRAFT; R3-161084, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, P.R. China; 20160523 - 20160527 14 May 2016 (2016-05-14), XP051094681, Retrieved from the Internet: URL:http://www.3gpp.org/ftp/tsg_ran/WG3_Iu /TSGR3_92/Docs/ [retrieved on 2016-05-14]
- CATT: "Discussion on Mobility Procedures of LWA", 3GPP DRAFT; R3-160614 DISCUSSION ON MOBILITY PROCEDURES OF LWA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India; 20160411 - 20160415 1 April 2016 (2016-04-01), XP051082827, Retrieved from the Internet: URL:http://www.3gpp.org/ftp/tsg_ran/WG3_Iu /TSGR3_91bis/Docs/ [retrieved on 2016-04-01]

## Description

### TECHNICAL FIELD

Embodiments of the present invention relate to the communications technologies, and in particular, to a handover method and apparatus.

### BACKGROUND

A Long Term Evolution wireless local area network aggregation (Long Term Evolution Wireless Local Area Network Aggregation, LWA for short) is a technology in which a wireless local area network (Wireless Local Access Network, WLAN for short) technology is applied to a Long Term Evolution (Long Term Evolution, LTE for short) network.

In an existing LWA technology, an access procedure of user equipment (User Equipment, user equipment for short) is as follows: Abase station sets a wireless local area network termination (WLAN Termination, WT for short) counter value to 0, and generates a key S-Kwt by using a KeNB shared by the user equipment and the base station and the WT counter value; an eNB sends a WT addition request message to a WT, where the WT addition request message carries the S-Kwt, a mobility set (mobility set), and a Medium Access Control (Medium Access Control, MAC for short) address of the user equipment; the WT delivers the S-Kwt to all access points in the mobility set, so that the access point may learn a key used by the user equipment that is to access a wireless network; the WT sends a WT addition request acknowledgment message to the base station; the base station sends a radio resource control (Radio Resource Control, RRC for short) connection reconfiguration message to the user equipment, where the message carries the mobility set and the WT counter value required for generating the S-Kwt; the user equipment generates the key S-Kwt based on the WT counter value and the S-Kwt of the KeNB shared by the user equipment and the base station; the user equipment sends an RRC connection reconfiguration complete message to the base station, and the user equipment starts to be associated with the access point in the mobility set, and accesses the wireless network; after the user equipment accesses the wireless network, the access point sends a notification message to the WT, to notify the user equipment of access success; and the WT sends a WT association acknowledgment message to the user equipment, to complete establishment of an LWA link.

However, when the user equipment needs to be handed over from one base station to another base station, according to a prior-art method, the user equipment needs to first disconnect an LWA link from an original base station, and then establish an LWA link to a new base station. In the handover process, because the LWA link is disconnected, continuity of data transmission is affected.

3GPP contribution R3-161362 discusses LTE mobility without WT change. In particular, this document proposes that the HANDOVER REQUEST X2 message should include a source UE LWA context including which E-RABs (E-UTRAN radio access bearers) are LWA bearers and including a WLAN mobility set, and proposes that the HANDOVER REQUEST ACKNOWLEDGE X2 message should include a target UE LWA context including a proposed mobility set and including which E-RABs are to be admitted as LWA bearers.

3GPP contributions R3-161085, R3-161084 and R3-160614 provide further background to the invention.

### SUMMARY

Embodiments of the present invention provide a handover method and apparatus, so as to reduce an impact on continuity of data transmission in a handover process.

According to a first aspect, an embodiment of the present invention provides a handover method performed by a processor of a target base station, comprising:
receiving a handover request message sent by a source base station, wherein the handover request message comprises first indication information, and the first indication information is used to indicate that user equipment is using a first connection, wherein the first connection is a Long Term Evolution wireless local area network aggregation connection, the first indication information comprising an identifier of the user equipment and a first mobility set, wherein the first mobility set comprises an identifier of at least one first access point; and
sending a handover request acknowledgment message to the source base station, wherein the handover request acknowledgment message comprises second indication information, and the second indication information is used to indicate that the first connection is maintained, wherein the second indication information is the identifier of the user equipment and the first mobility set,
the method further comprising:
   obtaining a first key, associated to a third mobility set, before or after the sending a handover request acknowledgment message to the source base station;
   obtaining the third mobility set of the user equipment based on a measurement report of the user equipment, after the sending a handover request acknowledgment message to the source base station.

In a possible design, the first indication information is an identifier indicating that the user equipment is using the first connection.

In a possible design, the second indication information is an identifier indicating that the first connection is maintained.

In a possible design, the identifier of the user equipment is a Medium Access Control address.

In a possible design, the obtaining a first key comprises:
generating the first key based on a second key and a Wireless local area network Termination, WT, counter value that are shared by the target base station and the user equipment.

In a possible design, the method further comprises a Wireless local area network Termination, WT, performing:
receiving a first request message sent by the target base station, wherein the first request message comprises third indication information, and the third indication information is used to indicate whether the WT maintains the first connection; and
determining, based on the third indication information, whether to maintain the first connection.

According to a second aspect, an embodiment of the present invention provides a base station, comprising a processor coupled with a non-transitory storage medium storing executable instructions; wherein the executable instructions, when executed by the processor, cause the processor to carry out the method of the target base station in the first aspect.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may derive other drawings from these accompanying drawings without creative efforts.
FIG. 1 is a diagram of a scenario architecture according to an embodiment of the present invention;
FIG. 2 is a schematic flowchart of Embodiment 1 of a handover method according to the present invention;
FIG. 3 is a schematic flowchart of Embodiment 2 of a handover method according to the present invention;
FIG. 4 is a schematic flowchart of Embodiment 3 of a handover method according to the present invention;
FIG. 5 is a schematic flowchart of Embodiment 4 of a handover method according to the present invention;
FIG. 6 is a schematic flowchart of Embodiment 5 of a handover method according to the present invention;
FIG. 7 is a schematic flowchart of Embodiment 6 of a handover method according to the present invention;
FIG. 8 is a schematic flowchart of Embodiment 7 of a handover method according to the present invention;
FIG. 9 is a schematic flowchart of Embodiment 8 of a handover method according to the present invention;
FIG. 10 is a schematic flowchart of Embodiment 9 of a handover method according to the present invention;
FIG. 11 is a schematic flowchart of Embodiment 10 of a handover method according to the present invention;
FIG. 12 is a schematic flowchart of Embodiment 11 of a handover method according to the present invention;
FIG. 13 is a schematic flowchart of Embodiment 13 of a handover method according to the present invention;
FIG. 14 is a schematic structural diagram of Embodiment 1 of a handover apparatus according to the present invention;
FIG. 15 is a schematic structural diagram of Embodiment 2 of a handover apparatus according to the present invention; and
FIG. 16 is a schematic structural diagram of Embodiment 3 of a handover apparatus according to the present invention.

### DESCRIPTION OF EMBODIMENTS

The following describes embodiments of the invention as originally claimed when filing the patent application. Any described "embodiments" not falling within the scope of the currently attached claims should be regarded as background examples useful for understanding the invention.

In the specification, claims, and accompanying drawings of the present invention, the terms "first", "second", "third", "fourth", and so on (if any) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

The following embodiments of the present invention are applicable to different wireless communications systems, such as a Global System for Mobile Communications (Global System for Mobile communications, GSM for short), a Universal Mobile Telecommunications System (Universal Mobile Telecommunications System, UMTS for short), and a scenario in which a future telecommunications system and a WALN are aggregated.

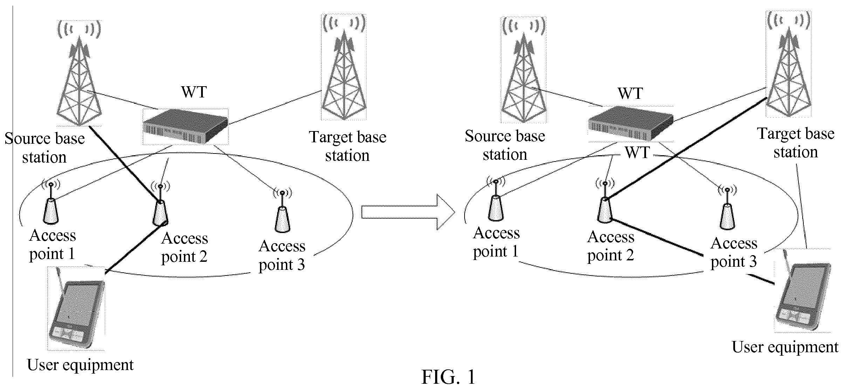

FIG. 1 is a diagram of a scenario architecture according to an embodiment of the present invention. As shown in FIG. 1, the scenario includes a source base station, a target base station, a WT, an access point, and user equipment. The source base station and the target base station are corresponding to different base stations in different wireless communications systems, for example, corresponding to eNBs in an LTE system. In the scenario, the user equipment is handed over from the source base station to the target base station, the user equipment and the source base station exchange information by using the access point (represented by an access point 2 in FIG. 1) and the WT, and the user equipment and the target base station exchange information by using the access point (represented by the access point 2 in FIG. 1) and the WT.

In the following embodiments of the present invention, a connection that is between the user equipment and the source base station and that is used to exchange information by using the access point and the WT is referred to as a first connection.

In the present invention, a handover request message sent by the source base station to the target base station carries a first indication message that is used to indicate that the user equipment is using the first connection, and the target base station receives the handover request message sent by the source base station. Because the first indication message carries the first indication message indicating that the user equipment is using the first connection, in a handover process, the source base station maintains the first connection, so as to reduce an impact on continuity of data transmission in the handover process.

"An identifier of user equipment" described in the following embodiments of the present invention may be a Medium Access Control address, another identifier that can be used to distinguish between user equipments, or the like. This is not limited in the present invention.

The "first connection" may be a Long Term Evolution wireless local area network aggregation (Long Term Evolution Wireless Local Area Network Aggregation, LWA for short) connection or another similar connection. This is not limited in the present invention.

Specific embodiments are used below to describe in detail the technical solutions of the present invention. The following several specific embodiments may be combined with each other, and a same or similar concept or process may not be described repeatedly in some embodiments.

### Embodiment 1

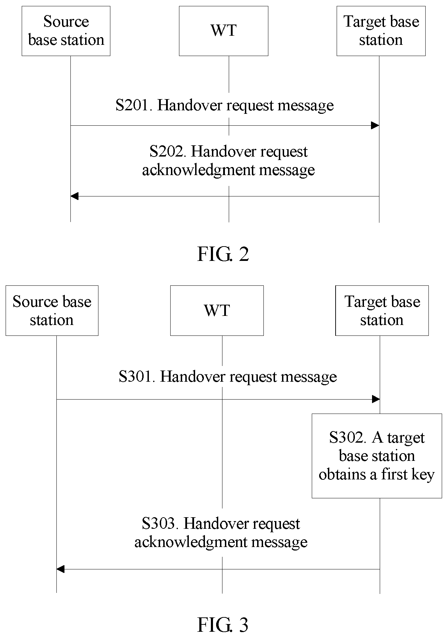

FIG. 2 is a schematic flowchart of Embodiment 1 of a handover method according to the present invention. As shown in FIG. 2, the method in this embodiment is as follows.

S201. A source base station sends a handover request message to a target base station.

The handover request message includes first indication information, and the first indication information is used to indicate that user equipment is using a first connection.

The first indication information includes but is not limited to the following two possible implementations.

In one possible implementation,
the first indication information is an identifier of the user equipment and a first mobility set, and the first mobility set includes an identifier of at least one first access point.

In the other possible implementation,
the first indication information is an identifier indicating that the user equipment is using the first connection.

The identifier may be a number, a letter, or a combination of a number and a letter. For example, a bit or several bits of the handover request message may be defined to set the first indication information. For example, when a bit is defined as 0, it indicates that the first connection is not being used; and when a bit is defined as 1, it indicates that the user equipment is using the first connection. Alternatively, the first indication information is represented by a letter. For example, a letter "A" represents that the user equipment is not using the first connection, or a letter "B" represents that the user equipment is using the first connection. This is not limited in the present invention, provided that a case in which the user equipment is using the first connection can be indicated.

S202. The target base station sends a handover request acknowledgment message to the source base station.

The handover request acknowledgment message includes second indication information, and the second indication information is used to indicate that the first connection is maintained.

After receiving the handover request message sent by the source base station, the target base station parses the handover request message, and the handover request message includes the first indication information that is used to indicate that the user equipment is using the first connection. The target base station determines, based on the first indication information, that the user equipment is using the first connection, and determines to instruct the source base station to maintain the first connection. Therefore, the handover request acknowledgment message is sent to the source base station, and the handover acknowledgment message includes the second indication information that is used to indicate that the first connection is maintained.

The source base station receives the handover request acknowledgment message sent by the target base station, where the handover request acknowledgment message includes the second indication information, and the second indication information is used to indicate that the first connection is maintained. The source base station determines, based on the second indication information, to maintain the first connection.

The second indication information includes but is not limited to the following two possible implementations.

In one possible implementation,
the first indication information is the identifier of the user equipment and the first mobility set, and the first mobility set includes the identifier of the at least one first access point.

In the other possible implementation,
the first indication information is an identifier indicating that the first connection is maintained.

The identifier may be a number, a letter, or a combination of a number and a letter. For example, a bit or several bits of the handover request acknowledgment message may be defined to set the second indication information. For example, when a bit is defined as 0, it indicates that the first connection is maintained; and when a bit is defined as 1, it indicates that the first connection is released. Alternatively, the second indication information is represented by a letter. For example, a letter "A" represents that the first connection is maintained, or a letter "B" represents that the first connection is released. This is not limited in the present invention, provided that a case in which the first connection is maintained is indicated.

In this embodiment, the source base station sends the handover request message to the target base station, where the handover request message includes the first indication information, and the first indication information is used to indicate that the user equipment is using the first connection. After receiving the handover request message, the target base station determines, based on the first indication information, that the user equipment is using the first connection, and determines to instruct the source base station to maintain the first connection. Therefore, the handover request acknowledgment message is sent to the source base station, and the handover acknowledgment message includes the second indication information that is used to indicate that the first connection is maintained. Therefore, in a handover process, the first connection is maintained, so as to reduce an impact on continuity of data transmission in the handover process.

### Embodiment 2

FIG. 3 is a schematic flowchart of Embodiment 2 of a handover method according to the present invention. Embodiment 2 is based on Embodiment 1. Before the target base station sends the handover request acknowledgment message to the source base station, the method further includes: The target base station obtains a first key. As shown in FIG. 3, the method in this embodiment is as follows.

S301. The source base station sends the handover request message to the target base station.

For detailed description of this step, refer to S201 in the embodiment shown in FIG. 2. Details are not described herein again.

S302. The target base station obtains the first key.

The first key may be S-Kwt, and the first key is generated based on a second key and a WT counter value that are shared by the target base station and the user equipment.

A manner of obtaining the first key includes but is not limited to the following possible implementations.

In a possible implementation, the target base station generates the first key based on the second key and the WT counter value that are shared by the target base station and the user equipment.

The second key may be K-eNB.

In another possible implementation,
the target base station receives the first key sent by the source base station.

To be specific, the source base station generates the first key, and sends the first key to the target base station. Therefore, the target base station may directly obtain the first key from the source base station instead of generating the first key.

In still another possible implementation,
the first key is generated based on a second key, a WT counter value, and private information that are shared by the target base station and the user equipment.

To improve security of the first key, the target base station generates the first key based on the second key, the WT counter value, and the private information, and sends the private information to the user equipment. Therefore, a first key of the source base station is isolated from the first key of the target base station, so as to reduce a possibility that the target base station is attacked when the source base station is attacked.

In still yet another possible implementation,
the target base station receives an initial key sent by the source base station, and generates the first key based on the initial key and private information.

To be specific, the source base station generates the initial key based on a second key and a WT counter value, and sends the initial key to the target base station. The target base station further generates the first key based on the initial key and the private information. Therefore, security of the first key is improved, and a first key of the source base station is isolated from the first key of the target base station, so as to reduce a possibility that the target base station is attacked when the source base station is attacked.

In the foregoing possible implementations, the private information may be implemented by using a random number.

S303. The target base station sends the handover request acknowledgment message to the source base station.

For detailed description of this step, refer to S202 in the embodiment shown in FIG. 2. Details are not described herein again.

### Embodiment 3

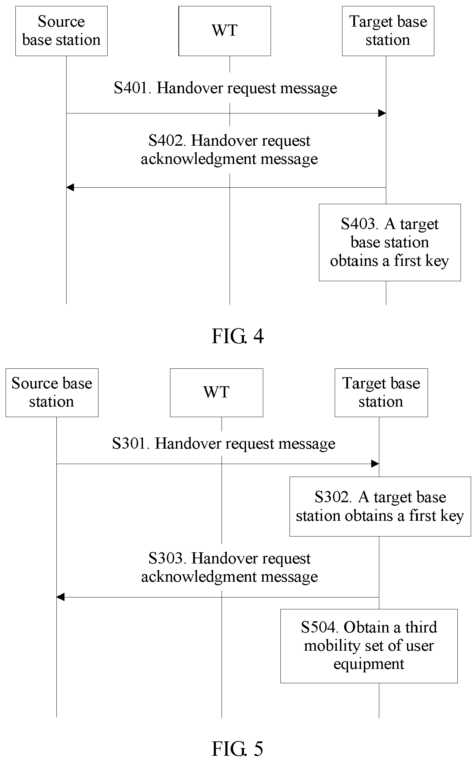

A difference between Embodiment 3 and Embodiment 2 lies in an execution sequence of the steps corresponding to S302 and S303. In Embodiment 2, the step corresponding to S302 is performed before the step corresponding to S303. In Embodiment 3, the step corresponding to S302 is performed after the step corresponding to S303. FIG. 4 is a schematic flowchart of Embodiment 3 of a handover method according to the present invention, including the following steps.

S401. The source base station sends the handover request message to the target base station.

For detailed description of this step, refer to S201 in the embodiment shown in FIG. 2. Details are not described herein again.

S402. The target base station sends the handover request acknowledgment message to the source base station.

For detailed description of this step, refer to S202 in the embodiment shown in FIG. 2. Details are not described herein again.

S403. The target base station obtains a first key.

For detailed description of this step, refer to S302 in the embodiment shown in FIG. 3. Details are not described herein again.

### Embodiment 4 and Embodiment 5

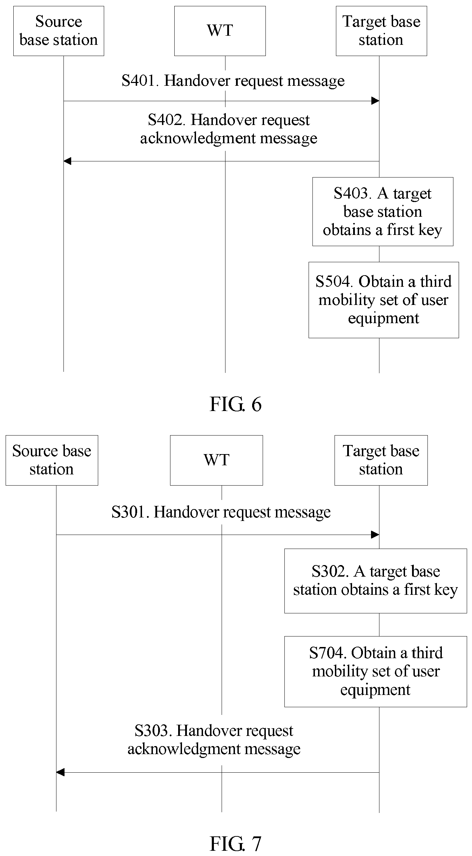

Embodiment 4 is based on the embodiment shown in Embodiment 2 or Embodiment 3. FIG. 5 is a schematic flowchart of Embodiment 4 of a handover method according to the present invention, and FIG. 6 is a schematic flowchart of Embodiment 5 of a handover method according to the present invention. FIG. 5 is based on the embodiment shown in FIG. 3, and FIG. 6 is based on the embodiment shown in FIG. 4. After the target base station sends the handover request acknowledgment message to the source base station, the method further includes:
S504. The target base station obtains a third mobility set of the user equipment.

The third mobility set is determined based on a measurement report of the user equipment, and the third mobility set includes an identifier of at least one third access point.

A manner of obtaining the third mobility set of the user equipment includes but is not limited to the following implementations.

In a possible implementation,
the target base station obtains the third mobility set of the user equipment based on the measurement report of the user equipment.

A possible manner of obtaining the measurement report is that the source base station may add the measurement report to a handover request, and send the handover request to the target base station, so that the target base station may obtain the measurement report from the handover request.

Another possible manner of obtaining the measurement report is that the target base station receives the measurement report sent by the user equipment.

In another possible implementation,
the source base station generates the third mobility set based on the measurement report of the user equipment, and adds the third mobility set to a handover request, and the target base station obtains the third mobility set of the user equipment from the handover request message.

### Embodiment 6 and Embodiment 7

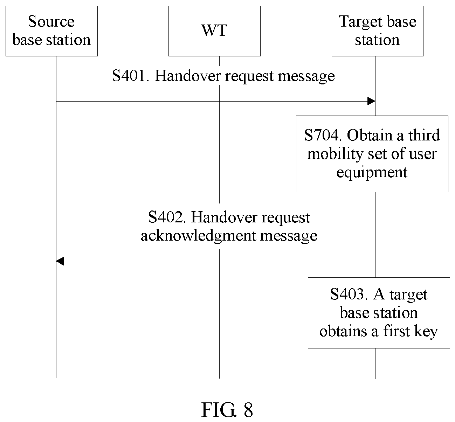

Embodiment 5 is based on the embodiment shown in Embodiment 2 or Embodiment 3. FIG. 7 is a schematic flowchart of Embodiment 6 of a handover method according to the present invention, and FIG. 8 is a schematic flowchart of Embodiment 7 of a handover method according to the present invention. FIG. 7 is based on the embodiment shown in FIG. 3, and FIG. 8 is based on the embodiment shown in FIG. 4. Before the target base station sends the handover request acknowledgment message to the source base station, the method further includes:
S704. The target base station obtains a third mobility set of the user equipment.

The third mobility set is determined based on a measurement report of the user equipment, and the third mobility set includes an identifier of at least one third access point.

A manner of obtaining the third mobility set of the user equipment includes but is not limited to the following implementations.

In a possible implementation,
the target base station obtains the third mobility set of the user equipment based on the measurement report of the user equipment.

A possible manner of obtaining the measurement report is that the source base station may add the measurement report to a handover request, and send the handover request to the target base station, so that the target base station may obtain the measurement report from the handover request.

In another possible implementation,
the source base station generates the third mobility set based on the measurement report of the user equipment, and adds the third mobility set to a handover request, and the target base station obtains the third mobility set of the user equipment from the handover request message.

### Embodiment 8

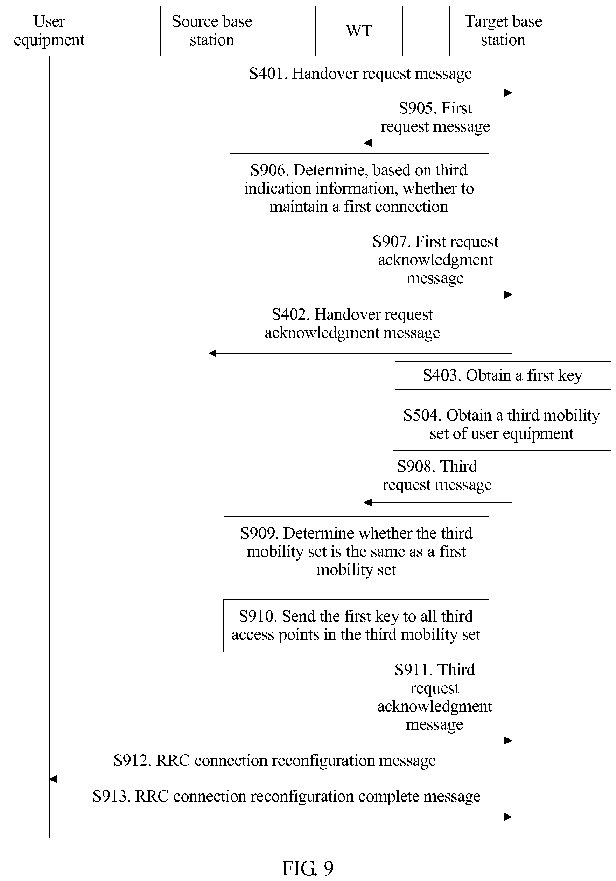

Embodiment 8 is based on the foregoing embodiments. Before the target base station sends the handover request acknowledgment message to the source base station, the method further includes S905 to S907. For example, based on the embodiment shown in FIG. 6, FIG. 9 is a schematic flowchart of Embodiment 8 of a handover method according to the present invention.

S905. The target base station sends a first request message to a WT.

The first request message includes third indication information, and the third indication information is used to indicate whether the WT maintains the first connection.

The third indication information includes but is not limited to the following two possible implementations.

In one possible implementation,
the third indication information includes the identifier of the user equipment and a second mobility set, and the second mobility set includes an identifier of at least one second access point.

In the other possible implementation,
the third indication information is an identifier indicating that the first connection is maintained.

The identifier may be a number, a letter, or a combination of a number and a letter. For example, a bit or several bits of the first request message may be defined to set the third indication information. For example, when a bit is defined as 0, it indicates that the first connection is maintained; and when a bit is defined as 1, it indicates that the first connection is released. Alternatively, the third indication information is represented by a letter. For example, a letter "A" represents that the first connection is maintained, and a letter "B" represents that the first connection is released. This is not limited in the present invention, provided that a case in which the first connection is maintained is indicated.

The first request message may be a first WT addition request message.

S906. The WT determines, based on third indication information, whether to maintain the first connection.

The WT receives the first request message sent by the target base station, and obtains the third indication message. When the third indication information includes the identifier of the user equipment and the second mobility set, the WT determines whether the second mobility set is the same as the first mobility set. If the second mobility set is the same as the first mobility set, the WT determines to maintain the first connection.

When the third indication information is the identifier indicating that the first connection is maintained, the WT determines to maintain the first connection.

S907. The WT sends a first request acknowledgment message to the target base station.

Optionally, the first request acknowledgment message further includes fourth indication information, and the fourth indication information is used to instruct the WT to maintain the first connection.

The fourth indication information may be an identifier indicating that the WT maintains the first connection. The identifier may be a number, a letter, or a combination of a number and a letter. For example, a bit or several bits of the first request acknowledgment message may be defined to set the fourth indication information. For example, when a bit is defined as 0, it indicates that the WT maintains the first connection; and when a bit is defined as 1, it indicates that the WT releases the first connection. Alternatively, the fourth indication information is represented by a letter. For example, a letter "A" represents that the WT maintains the first connection, and a letter "B" represents that the WT releases the first connection. This is not limited in the present invention, provided that a case in which the WT maintains the first connection is indicated.

Optionally, after the target base station sends the handover request acknowledgment message to the source base station, the method may further include the following steps.

S908. The target base station sends a third request message to the WT.

The third request message includes the first key and the third mobility set, and the third mobility set includes the identifier of the at least one third access point.

When the first request message may be the first WT addition request message, correspondingly, the third request message may be a first LWA modification request message.

S909. The WT determines whether the third mobility set is the same as the first mobility set.

S910. If the WT determines that the third mobility set is different from the first mobility set, the WT sends the first key to all third access points in the third mobility set.

S911. The WT sends a third request acknowledgment message to the target base station.

The target base station receives the third request acknowledgment message sent by the WT.

When the third request message is an LWA modification request message, correspondingly, the third request acknowledgment message may be an LWA modification request acknowledgment message.

S912. The target base station sends an RRC connection reconfiguration message to the user equipment.

The message carries the third mobility set and a parameter used to generate the first key.

The parameter used to generate the first key includes the WT counter value, or the WT counter value and the private information.

S913. The target base station receives an RRC connection reconfiguration complete message sent by the user equipment.

### Embodiment 9

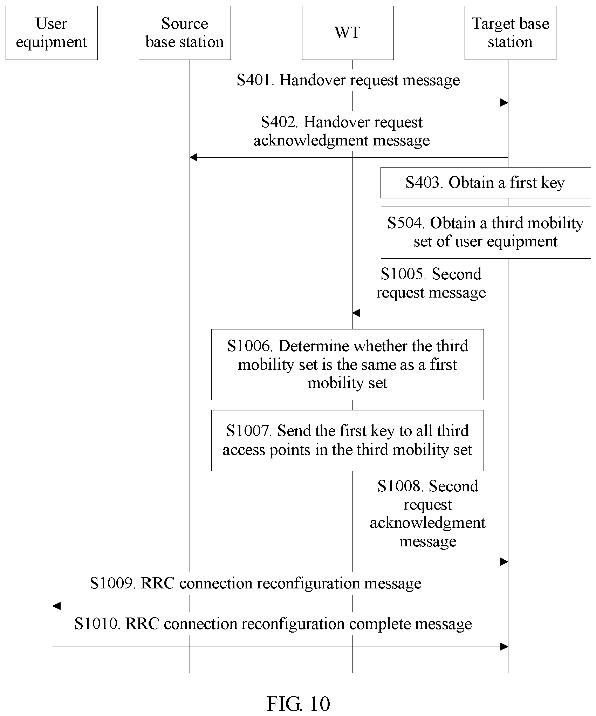

Embodiment 9 is based on the foregoing Embodiment 1 to Embodiment 7. After the target base station sends the handover request acknowledgment message to the source base station, the method further includes S1005 to S1010. For example, based on the embodiment shown in FIG. 6, FIG. 10 is a schematic flowchart of Embodiment 9 of a handover method according to the present invention.

S1005. The target base station sends a second request message to a WT.

The second request message includes the first key and the third mobility set.

The second request message may be a second WT addition request message.

S1006: The WT determines whether the third mobility set is the same as the first mobility set.

S1007: If the WT determines that the third mobility set is different from the first mobility set, the WT sends the first key to all third access points in the third mobility set.

S1008. The WT sends a second request acknowledgment message to the target base station.

The target base station receives the second request acknowledgment message sent by the WT.

When the second request message is the second WT addition request message, correspondingly, the second request acknowledgment message is a second WT addition request acknowledgment message.

S1009. The target base station sends an RRC connection reconfiguration message to the user equipment.

The message carries the third mobility set and a parameter used to generate the first key.

The parameter used to generate the first key includes the WT counter value, or the WT counter value and the private information.

S1010. The target base station receives an RRC connection reconfiguration complete message sent by the user equipment.

### Embodiment 10 and Embodiment 11

Embodiment 10 is based on the embodiment shown in Embodiment 8 or Embodiment 9. Before the RRC connection reconfiguration message is sent to the user equipment, the method further includes the following steps.

S1114. The target base station sends a path handover request message to an MME.

The target base station sends the path handover request message to the mobility management entity (Mobility Management Entity, MME for short).

S1115. The target base station receives a path handover request acknowledgment message to the MME.

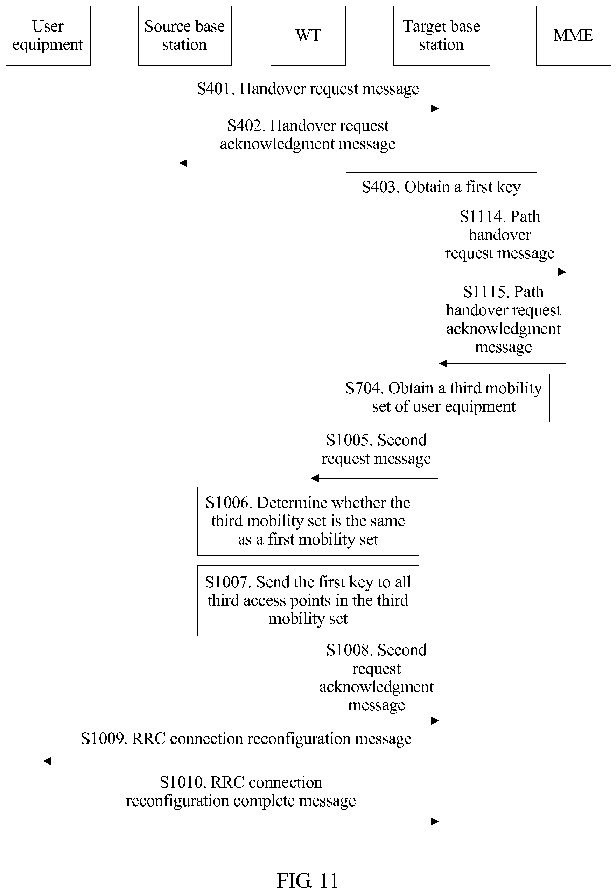

One possible implementation is shown in FIG. 11. FIG. 11 is a schematic flowchart of Embodiment 10 of a handover method according to the present invention. S1114 and S1115 are performed after the target base station sends the handover request acknowledgment message and before the third set of the user equipment is obtained.

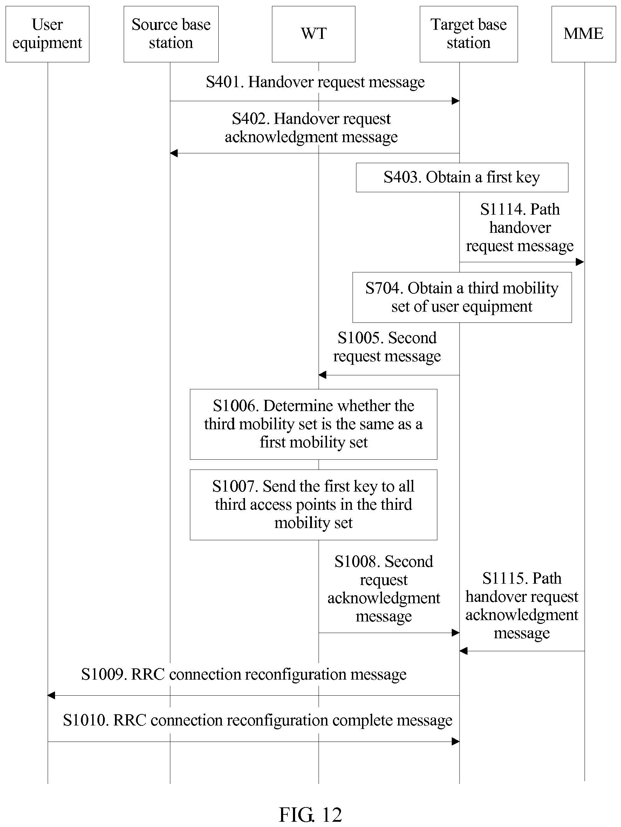

The other possible implementation is shown in FIG. 12. FIG. 12 is a schematic flowchart of Embodiment 11 of a handover method according to the present invention. S1114 is performed before the third mobility set of the user equipment is obtained, and S1115 is performed after the second request acknowledgment message sent by the WT is received and before the RRC connection reconfiguration message is sent to the user equipment.

### Embodiment 12

In the foregoing embodiments, the handover request further includes an identifier of a fourth access point to which the user equipment is currently connected.

The determined third mobility set includes the identifier of the fourth access point, or the third mobility set does not include the identifier of the fourth access point.

### Embodiment 13

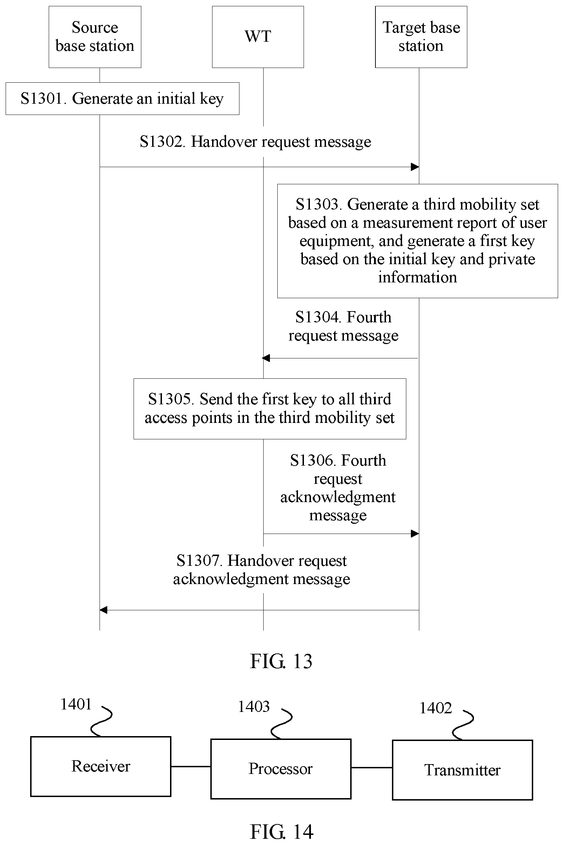

FIG. 13 is a schematic flowchart of Embodiment 13 of a handover method according to the present invention. The method in this embodiment is as follows.

S1301. A source base station generates an initial key.

S1302. The source base station sends a handover request message to a target base station.

The handover request message carries an identifier of user equipment, a first mobility set, a measurement report of the user equipment, and an identifier of a fourth access point to which the user equipment is currently connected.

S1303. The target base station generates a third mobility set based on a measurement report of user equipment, and generates a first key based on the initial key and private information.

S1304. The target base station sends a fourth request message to a WT.

The fourth request message includes the identifier of the user equipment, the first mobility set, the third mobility set, the first key, and the identifier of the fourth access point.

After receiving the fourth request message, the WT detects the first mobility set, and then determines to maintain a first connection; or detects the third mobility set, and then determines to perform S1305.

S1305. The WT sends the first key to all access points in the third mobility set.

S1306. The WT sends a fourth request acknowledgment message to the target base station.

S1307. The target base station sends a handover request acknowledgment message to the source base station.

The steps involved in this embodiment of the present invention are steps related to improvement of the present invention. For ease of description, another step in a handover procedure is not shown in the present invention.

FIG. 14 is a schematic structural diagram of Embodiment 1 of a handover apparatus according to the present invention. The apparatus in this embodiment is deployed in a target base station. As shown in FIG. 14, the apparatus in this embodiment includes a receiver 1401 and a transmitter 1402.

The receiver 1401 is configured to receive a handover request message sent by a source base station, where the handover request message includes first indication information, and the first indication information is used to indicate that user equipment is using a first connection.

The transmitter 1402 is configured to send a handover request acknowledgment message to the source base station, where the handover request acknowledgment message includes second indication information, and the second indication information is used to indicate that the first connection is maintained.

In the foregoing embodiment, the first indication information is an identifier of the user equipment and a first mobility set, and the first mobility set includes an identifier of at least one first access point.

In the foregoing embodiment, the first indication information is an identifier indicating that the user equipment is using the first connection.

In the foregoing embodiment, the second indication information is an identifier indicating that the first connection is maintained.

In the foregoing embodiment, the second indication information is the identifier of the user equipment and the first mobility set.

In the foregoing embodiment, the identifier of the user equipment is a Medium Access Control address.

In the foregoing embodiment, the first connection is a Long Term Evolution wireless local area network aggregation connection.

In the foregoing embodiment, the apparatus further includes a processor 1403, where the processor 1403 is configured to obtain a first key.

In the foregoing embodiment, the processor 1403 is further configured to obtain a third mobility set of the user equipment, where the third mobility set is determined based on a measurement report of the user equipment, and the third mobility set includes an identifier of at least one third access point.

In the foregoing embodiment, the processor 1403 is specifically configured to generate the first key based on a second key and a WT counter value that are shared by the target base station and the user equipment.

In the foregoing embodiment, the processor 1403 is specifically configured to obtain the third mobility set of the user equipment based on a measurement report of the user equipment.

In the foregoing embodiment, the transmitter 1402 is further configured to send a first request message to a WT, where the first request message includes third indication information, and the third indication information is used to indicate whether the WT maintains the first connection.

In the foregoing embodiment, the transmitter 1402 is further configured to send a second request message to the WT, where the second request message includes the first key and the third mobility set.

The receiver 1401 is further configured to receive a second request acknowledgment message sent by the WT.

The transmitter 1402 is further configured to send a radio resource control RRC connection reconfiguration message to the user equipment, where the message carries the third mobility set and a parameter used to generate the first key.

The receiver 1401 is further configured to receive an RRC connection reconfiguration complete message sent by the user equipment.

In the foregoing embodiment, the transmitter 1402 is further configured to send a third request message to the WT, where the third request message includes a first key and a third mobility set, and the third mobility set includes an identifier of at least one third access point.

The receiver 1401 is further configured to receive a third request acknowledgment message sent by the WT.

The transmitter 1402 is further configured to send an RRC connection reconfiguration message to the user equipment, where the message carries the third mobility set and a parameter used to generate the first key.

The receiver 1401 is further configured to receive an RRC connection reconfiguration complete message sent by the user equipment.

In the foregoing embodiment, the transmitter 1402 is further configured to send a path handover request message to a mobility management entity MME.

The receiver 1401 is further configured to receive a path handover request acknowledgment message sent by the MME.

In the foregoing embodiment, the transmitter 1402 is further configured to send a path handover request message to a mobility management entity MME.

The receiver 1401 is further configured to receive a path handover request acknowledgment message sent by the MME.

In the foregoing embodiment, the receiver 1401 is further configured to receive a handover determining message sent by the user equipment.

The transmitter 1402 is further configured to send a path handover request message to a mobility management entity MME.

The receiver 1401 is further configured to receive a path handover request acknowledgment message sent by the MME.

In the foregoing embodiment, the processor 1403 is specifically configured to control the receiver to receive the first key sent by the source base station.

In the foregoing embodiment, the handover request message further includes the measurement report of the user equipment.

In the foregoing embodiment, the handover request message further includes an identifier of a fourth access point to which the user equipment is currently connected.

In the foregoing embodiment, the third mobility set includes the identifier of the fourth access point; or
the third mobility set does not include the identifier of the fourth access point.

In the foregoing embodiment, the handover request message further includes the third mobility set.

The processor 1403 is specifically configured to obtain the third mobility set of the user equipment from the handover request message.

In the foregoing embodiment, the processor 1403 is specifically configured to generate the first key based on a second key, a WT counter value, and private information that are shared by the target base station and the user equipment.

In the foregoing embodiment, the processor 1403 is specifically configured to: control the receiver to receive an initial key sent by the source base station; and generate the first key based on the initial key and the private information.

In the foregoing embodiment, the third indication information includes the identifier of the user equipment and a second mobility set.

In the foregoing embodiment, the third indication information is an identifier indicating that the first connection is maintained.

The apparatus embodiment may be correspondingly used to execute the technical solution executed by the target base station in any method embodiment shown in Embodiment 2 to Embodiment 13. An implementation principle and a technical effect of the apparatus embodiment are similar to those of the technical solutions, and details are not described herein again.

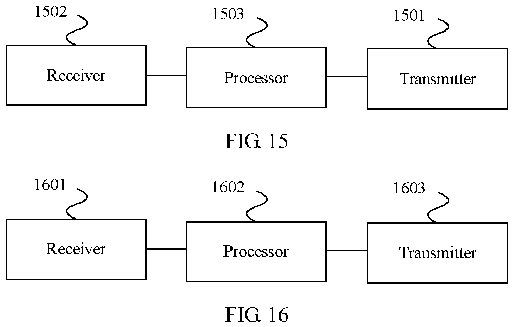

FIG. 15 is a schematic structural diagram of Embodiment 2 of a handover apparatus according to the present invention. The apparatus in this embodiment is deployed in a source base station. The apparatus in this embodiment includes a transmitter 1501 and a receiver 1502. The transmitter 1501 is configured to send a handover request message to a target base station, where the handover request message includes first indication information, and the first indication information is used to indicate that user equipment is using a first connection.

The receiver 1502 is configured to receive a handover request acknowledgment message sent by the target base station, where the handover request acknowledgment message includes second indication information, and the second indication information is used to indicate that the first connection is maintained.

In the foregoing embodiment, the first indication information is an identifier of the user equipment and a first mobility set, and the first mobility set includes an identifier of at least one first access point.

In the foregoing embodiment, the first indication information is an identifier indicating that the user equipment is using the first connection.

In the foregoing embodiment, the second indication information is an identifier indicating that the first connection is maintained.

In the foregoing embodiment, the second indication information is the identifier of the user equipment and the first mobility set.

In the foregoing embodiment, the identifier of the user equipment is a Medium Access Control address.

In the foregoing embodiment, the first connection is a Long Term Evolution wireless local area network aggregation connection.

In the foregoing embodiment, the transmitter is further configured to send a measurement report of the user equipment to the target base station.

In the foregoing embodiment, the handover request message further includes a third mobility set.

The apparatus further includes a processor 1503.

The processor 1503 is configured to generate the third mobility set based on a measurement report of the user equipment.

The apparatus embodiment may be correspondingly used to execute the technical solution executed by the source base station in any method embodiment shown in Embodiment 2 to Embodiment 13. An implementation principle and a technical effect of the apparatus embodiment are similar to those of the technical solutions, and details are not described herein again.

FIG. 16 is a schematic structural diagram of Embodiment 3 of a handover apparatus according to the present invention. The apparatus in this embodiment is deployed in a WT. The apparatus in this embodiment includes a receiver 1601 and a processor 1602. The receiver 1601 is configured to receive a first request message sent by a target base station, where the first request message includes third indication information, and the third indication information is used to indicate whether the WT maintains the first connection. The processor 1602 is configured to determine, based on the third indication information, whether to maintain the first connection.

In the foregoing embodiment, the third indication information includes an identifier of the user equipment and a second mobility set, and the second mobility set includes an identifier of at least one second access point.

In the foregoing embodiment, the third indication information is an identifier indicating that the first connection is maintained.

In the foregoing embodiment, the processor 1602 is specifically configured to: if the second mobility set is the same as a first mobility set, determine to maintain the first connection, where the first mobility set includes an identifier of at least one first access point.

In the foregoing embodiment, the receiver 1601 is further configured to receive a third request message sent by the target base station, where the third request message includes a first key and a third mobility set, and the third mobility set includes an identifier of at least one third access point.

The processor 1602 is further configured to determine whether the third mobility set is the same as the first mobility set.

The apparatus further includes a transmitter 1603.

The transmitter 1603 is configured to: if the third mobility set is different from the first mobility set, send the first key to all third access points in the third mobility set.

The transmitter is further configured to send a third request acknowledgment message to the target base station.

The apparatus embodiment may be correspondingly used to execute the technical solution executed by the WT in any method embodiment shown in Embodiment 2 to Embodiment 13. An implementation principle and a technical effect of the apparatus embodiment are similar to those of the technical solutions, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or to some technical features thereof, without departing from the scope of the attached claims.

## Claims

1. A handover method performed by a processor of a target base station, comprising:
receiving (S401) a handover request message sent by a source base station, wherein the handover request message comprises first indication information, and the first indication information is used to indicate that user equipment is using a first connection, wherein the first connection is a Long Term Evolution wireless local area network aggregation connection, the first indication information comprising an identifier of the user equipment and a first mobility set, wherein the first mobility set comprises an identifier of at least one first access point; and
sending (S402) a handover request acknowledgment message to the source base station, wherein the handover request acknowledgment message comprises second indication information, and the second indication information is used to indicate that the first connection is maintained, wherein the second indication information is the identifier of the user equipment and the first mobility set,
the method further comprising:
obtaining (S403) a first key, associated to a third mobility set, before or after the sending a handover request acknowledgment message to the source base station;
obtaining (S504) the third mobility set of the user equipment based on a measurement report of the user equipment, after the sending a handover request acknowledgment message to the source base station.

2. The method according to claim 1, wherein the first indication information is an identifier indicating that the user equipment is using the first connection.

3. The method according to any one of claims 1 and 2, wherein the second indication information is an identifier indicating that the first connection is maintained.

4. The method according to claim 1, wherein the identifier of the user equipment is a Medium Access Control address.

5. The method according to claim 1, wherein the obtaining a first key comprises:
generating the first key based on a second key and a Wireless local area network Termination, WT, counter value that are shared by the target base station and the user equipment.

6. A handover method comprising the method of any preceding claim and further comprising a Wireless local area network Termination, WT, performing:
receiving (S905) a first request message sent by the target base station, wherein the first request message comprises third indication information, and the third indication information is used to indicate whether the WT maintains the first connection; and
determining (S906), based on the third indication information, whether to maintain the first connection.

7. A base station, comprising a processor coupled with a non-transitory storage medium storing executable instructions; wherein the executable instructions, when executed by the processor, cause the processor to carry out the target base station method of any one of claims 1-5.

## Patentansprüche

1. Handover-Verfahren, durchgeführt von einem Prozessor einer Ziel-Basisstation, Folgendes umfassend:
Empfangen (S401) einer von einer Quellen-Basisstation gesendeten Handover-Anforderungsnachricht,
wobei die Handover-Anforderungsnachricht eine erste Anzeigeinformation enthält, und die erste Anzeigeinformation verwendet wird, um anzugeben, dass ein Benutzergerät eine erste Verbindung verwendet,
wobei die erste Verbindung eine Long Term Evolution WLAN-Aggregationsverbindung ist und die erste Anzeigeinformation eine Kennung des Benutzergerätes und eines ersten Mobilitäts-Sets umfasst,
wobei das erste Mobilitäts-Set eine Kennung von mindestens einem ersten Zugangspunkt umfasst; und
Senden (S402) einer Handover-Anforderungs-Bestätigungsnachricht zu der Quellen-Basisstation,
wobei die Handover-Anforderungs-Bestätigungsnachricht eine zweite Anzeigeinformation enthält, und die zweite Anzeigeinformation verwendet wird, um anzugeben, dass die erste Verbindung aufrechterhalten wird,
wobei die zweite Anzeigeinformation die Kennung des Benutzergerätes und des ersten Mobilitäts-Sets ist und das Verfahren ferner Folgendes umfasst:
Erhalten (S403) eines ersten Schlüssels, verbunden mit einem dritten Mobilitäts-Set, vor oder nach dem Senden einer Handover-Anforderungs-Bestätigungsnachricht zu der Quellen-Basisstation;
Erhalten (S504) des dritten Mobilitäts-Sets des Benutzergerätes, basierend auf einem Messungsbericht des Benutzergerätes, nach dem Senden einer Handover-Anforderungs-Bestätigungsnachricht zu der Quellen-Basisstation.

2. Verfahren gemäß Anspruch 1,
wobei die erste Anzeigeinformation eine Kennung ist, die angibt, dass das Benutzergerät die erste Verbindung verwendet.

3. Verfahren gemäß einem der Ansprüche 1 und 2,
wobei die zweite Anzeigeinformation eine Kennung ist, die angibt, dass die erste Verbindung aufrechterhalten wird.

4. Verfahren gemäß Anspruch 1,
wobei die Kennung des Benutzergerätes eine Medium Access Control-Adresse ist.

5. Verfahren gemäß Anspruch 1,
wobei das Erhalten eines ersten Schlüssels Folgendes umfasst:
Erzeugen des ersten Schlüssels, basierend auf einem zweiten Schlüssel und einem WLAN-Terminierungs (WT)-Zählerwert, die von der Ziel-Basisstation und dem Benutzergerät gemeinsam genutzt werden.

6. Handover-Verfahren, das Verfahren eines vorhergehenden Anspruchs umfassend, und ferner eine WLAN-Terminierung (WT) umfassend, das Folgendes durchführt:
Empfangen (S905) einer von der Ziel-Basisstation gesendeten ersten Anforderungsnachricht,
wobei die erste Anforderungsnachricht eine dritte Anzeigeinformation enthält, und die dritte Anzeigeinformation verwendet wird, um anzugeben, ob die WT die erste Verbindung aufrechterhält; und
Bestimmen (S906), basierend auf der dritten Anzeigeinformation, ob die erste Verbindung aufrechterhalten werden soll.

7. Basisstation, einen Prozessor umfassend, der mit einem nichtflüchtigen Speichermedium gekoppelt ist, das ausführbare Anweisungen speichert,
wobei die ausführbaren Anweisungen, wenn sie von dem Prozessor ausgeführt werden, den Prozessor veranlassen, das Ziel-Basisstationsverfahren nach einem der Ansprüche 1-5 auszuführen.

## Revendications

1. Procédé de transfert réalisé par le processeur d'une station de base cible, comprenant :
la réception (S401) d'un message de demande de transfert envoyé par une station de base source, le message de demande de transfert comprenant des premières informations d'indication, et les premières informations d'indication servant à indiquer qu'un équipement utilisateur utilise une première connexion, la première connexion étant une connexion d'agrégation de réseau local sans fil de topologie LTE (Long Term Evolution), les premières informations d'indication comprenant un identifiant de l'équipement utilisateur et un premier ensemble de mobilité, le premier ensemble de mobilité comprenant un identifiant d'au moins un premier point d'accès ; et
l'envoi (S402) d'un message d'acquittement de demande de transfert à la station de base source, le message d'acquittement de demande de transfert comprenant des secondes informations d'indication, et les secondes informations d'indication servant à indiquer que la première connexion est maintenue, les secondes informations d'indication étant l'identifiant de l'équipement utilisateur et le premier ensemble de mobilité,
le procédé comprenant en outre :
l'obtention (S403) d'une première clé, associée à un troisième ensemble de mobilité, avant ou après l'envoi d'un message d'acquittement de demande de transfert à la station de base source ;
l'obtention (S504) du troisième ensemble de mobilité de l'équipement utilisateur sur la base d'un rapport de mesure de l'équipement utilisateur, après l'envoi d'un message d'acquittement de demande de transfert à la station de base source.

2. Procédé selon la revendication 1, dans lequel les premières informations d'indication sont un identifiant indiquant que l'équipement utilisateur utilise la première connexion.

3. Procédé selon une quelconque des revendications 1 et 2, dans lequel les secondes informations d'indication sont un identifiant indiquant que la première connexion est maintenue.

4. Procédé selon la revendication 1, dans lequel l'identifiant de l'équipement utilisateur est une adresse de commande d'accès au support.

5. Procédé selon la revendication 1, dans lequel l'obtention d'une première clé comprend :
la génération de la première clé sur la base d'une seconde clé, et d'une valeur de compteur de terminaison de réseau local sans fil, WT, qui sont partagées par la station de base cible et l'équipement utilisateur.

6. Procédé de transfert comprenant le procédé selon n'importe quelle revendication précédente et comprenant en outre une terminaison de réseau local sans fil, WT, réalisant :
une réception (S905) d'un premier message de demande envoyé par la station de base cible, le premier message de demande comprenant des troisièmes informations d'indication, et les troisièmes informations d'indication servant à indiquer que la WT maintient ou non la première connexion ; et
la détermination (S906), sur la base des troisièmes informations d'indication, qu'il convient ou non de maintenir la première connexion.

7. Station de base, comprenant un processeur couplé à un support de mémorisation non transitoire mémorisant des instructions exécutables ; dans laquelle les instructions exécutables, à leur exécution par le processeur, amènent le processeur à mettre en œuvre le procédé de station de base cible selon l'une quelconque des revendications 1 à 5.
